# EUROPÄISCHE PATENTSCHRIFT

(11) **EP 4 045 823 B1**
(45) Veröffentlichungstag und Bekanntmachung des Hinweises auf die Patenterteilung: **26.02.2025**
(21) Anmeldenummer: 20786450.5
(22) Anmeldetag: 24.09.2020
(51) Int. Cl.: F16J 15/34, F16J 15/3208, F16J 15/3236, F16C 17/02, F16C 19/38, F16C 21/00, F16C 23/08, F16C 33/36, F16C 33/72, F16C 33/74

(54) **WELLENANORDNUNG, GETRIEBE MIT EINER WELLENANORDNUNG UND EXTRUDER MIT GETRIEBE MIT EINER WELLENANORDNUNG, MIT EINER RELATIV ZU EINEM FLANSCHTEIL DREHBAR GELAGERTEN WELLE**
SHAFT ASSEMBLY, TRANSMISSION COMPRISING A SHAFT ASSEMBLY AND EXTRUDER WITH A TRANSMISSION COMPRISING A SHAFT ASSEMBLY HAVING A SHAFT MOUNTED SUCH THAT IT CAN ROTATE RELATIVE TO A FLANGE PART
ENSEMBLE ARBRE, TRANSMISSION COMPRENANT UN ENSEMBLE ARBRE ET EXTRUDEUSE AVEC UNE TRANSMISSION COMPRENANT UN ENSEMBLE ARBRE AYANT UN ARBRE MONTÉ DE TELLE SORTE QU'IL PEUT TOURNER PAR RAPPORT À UNE PARTIE BRIDE

(30) Priorität: 18.10.2019 DE 102019007247
(43) Veröffentlichungstag der Anmeldung: 24.08.2022
(73) Patentinhaber: SEW-EURODRIVE GmbH & Co. KG, 76646 Bruchsal (DE)
(72) Erfinder: SOARES, Juliano Cesar, 13340-486 Indaiatuba - SP (BR); VIEIRA, Antonio Ventriglia, 13320-370 Salto - SP (BR)
(86) Internationale Anmeldenummer: PCT/EP2020/025431
(87) Internationale Veröffentlichungsnummer: WO 2021/073770

(56) Entgegenhaltungen:
- EP-A1- 1 267 107
- WO-A1-2015/064059
- WO-A1-2018/132413
- WO-A1-92/07207
- JP-B2- 5 101 357
- KR-A- 20110 069 955
- KR-A- 20110 069 955
- KR-B1- 101 335 188
- US-B2- 7 083 170

## Beschreibung

Die Erfindung betrifft eine Wellenanordnung, Getriebe mit einer Wellenanordnung und Extruder mit Getriebe mit einer Wellenanordnung, mit einer relativ zu einem Flanschteil drehbar gelagerten Welle.

Es ist allgemein bekannt, dass Wellendichtringe zum Abdichten von Getriebewellen verwendet werden.

**Aus der** DE 38 21 971 A1 **ist eine Stopfbuchse zum Abdichten einer Welle mit großem Rundlauffehler bekannt.**

**Aus der** EP 1 893 898 A1 **ist eine radiale Dichtungsvorrichtung zum Einsatz in einer Radialpumpe bekannt.**

**Aus der** KR2011 0069955 A **ist als nächstliegender Stand der Technik eine Wellenanordnung bekannt.**

**Aus der** WO 2018/132413 A1 **ist eine passive fehlertolerante Wellendichtungsanordnung bekannt.**

**Aus der** EP 1 267 107 A1 **ist eine Stangenprimärdichtung** mit den Merkmalen des Oberbegriffs des Anspruchs 1 **bekannt.**

Der Erfindung liegt daher die Aufgabe zugrunde, eine Abdichtung bei einer Wellenanordnung für hohen Druckunterschied weiterzubilden.

Erfindungsgemäß wird die Aufgabe bei der Wellenanordnung nach den in Anspruch 1 und bei dem Getriebe oder bei dem Extruder nach den in Anspruch 12 angegebenen Merkmalen gelöst.

Wichtige Merkmale der Erfindung bei der Wellenanordnung mit einer relativ zu einem Flanschteil drehbar gelagerten Welle sind, dass auf die Welle eine Hülse aufgesteckt und drehfest verbunden ist, insbesondere stoffschlüssig und kraftschlüssig verbunden ist,
wobei das Flanschteil eine erste Ringnut aufweist und eine zur ersten Ringnut koaxial ausgerichtete zweite und/oder dritte Ringnut,
wobei in der zweiten und/oder dritten Ringnut eine oder jeweils eine Dichtanordnung angeordnet ist,
wobei die jeweilige Dichtanordnung jeweils einen Basisring aufweist, der radial umgeben ist von einem jeweiligen Außenring, wobei der Basisring die Hülse berührt und der Außenring die Wandung der zweiten Ringnut berührt,
wobei in der ersten Ringnut ein Führungsring zur Zentrierung der Hülse angeordnet ist,

insbesondere wobei der Führungsring sowohl die Hülse als auch die Wandung der Ringnut berührt.

Von Vorteil ist dabei, dass mittels des Führungsrings die Welle koaxial zum Basisring ausgerichtet wird und somit die Laufbedingungen des Basisrings möglichst konstant sind. Auf diese Weise ist auch ein hoher Druckunterschied abdichtbar. Der Basisring liegt dabei flächig an und wird von dem Außenring an die Hülse angedrückt, da der Außenring elastisch gespannt, insbesondere vorgespannt, ist und somit der Basisring vom Außenring auf die Hülse aufgeschrumpft wird.

Bei einer vorteilhaften Ausgestaltung ist der Führungsring an der Wandung der ersten Ringnut abgestützt und zur Hülse hin ist ein Gleitkontakt zwischen Führungsring und Hülse vorhanden. Von Vorteil ist dabei, dass der Führungsring zwar auch relativ zum Flanschteil und/oder zur Hülse drehbar ist, aber der Führungsring fungiert wesentlich als Zentrierung oder als zentrierendes zusätzliches Lager für die Hülse, so dass die Basisringe mit möglichst konstanten Laufbedingungen effizient arbeiten.

Bei einer vorteilhaften Ausgestaltung ist der Außenring als O-Ring ausgeführt. Von Vorteil ist dabei, dass eine einfache kostengünstige Ausführung ermöglicht ist.

Bei einer vorteilhaften Ausgestaltung berührt der Basisring die Hülse flächig,
insbesondere also die Berührfläche der Hülse mit dem Basisring ein Zylindermantelabschnitt ist und/oder der Basisring aus einem Polyethylen gefertigt ist, insbesondere aus einem Polyethylen mit ultrahohem Molekulargewicht. Von Vorteil ist dabei, dass eine zu den Ringnuten und/oder Basisringen koaxiale Zentrierung der Hülse in einfacher Weise ermöglicht ist.

Bei einer vorteilhaften Ausgestaltung berührt der Führungsring die Hülse flächig,
insbesondere also die Berührfläche der Hülse mit dem Führungsring ein Zylindermantelabschnitt ist. Von Vorteil ist dabei, dass eine effiziente Zentrierung der Hülse erreichbar ist.

Bei einer vorteilhaften Ausgestaltung ist der Führungsring aus einem härteren Material als der Basisring ausgeführt. Von Vorteil ist dabei, dass der Führungsring die Hülse koaxial zentriert und somit die Laufbedingungen für die Basisringe konstant gehalten.

Bei einer vorteilhaften Ausgestaltung ist die Berührfläche zwischen Hülse und Führungsring in axialer Richtung breiter als die Berührfläche zwischen Hülse und Basisring. Von Vorteil ist dabei, dass die Ableitung der für die Zentrierung notwendigen Kräfte effizient ausführbar ist.

Bei einer vorteilhaften Ausgestaltung ist die erste Ringnut radial weniger ausgedehnt als die zweite Ringnut. Von Vorteil ist dabei, dass der Führungsring axial breiter ausgedehnt ist als in radialer Richtung. Somit ist die Zentrierung durch den Führungsring effizient ausführbar.

Bei einer vorteilhaften Ausgestaltung ist die erste Ringnut in axialer Richtung zwischen der zweiten und der dritten Ringnut angeordnet. Von Vorteil ist dabei, dass der Abstand von der ersten Ringnut zu den anderen beiden Ringnuten gering ist und somit die mittels des Führungsrings bewirkte Zentrierung wirksam ist für die beiden Basisringe. Dabei ist der axiale Abstand zwischen der ersten Ringnut und der zweiten und/oder dritten Ringnut kleiner als der Innenradius des Führungsrings, insbesondere also kleiner als der halbe Durchmesser der Ringöffnung des Führungsrings.

Erfindungsgemäß ist auf der von der ersten Ringnut abgewandten Seite der zweiten Ringnut ein V-Ring auf der Hülse aufgenommen, dessen Dichtlippe das Flanschteil berührt,
wobei der V-Ring von den Ringnuten in axialer Richtung beabstandet ist. Von Vorteil ist dabei, dass von der über die Extruderscneckenkopplung an die Welle drehfest angebundene Extruderschnecke gefördertes Material nicht oder nur unwesentlich in den Dichtbereich zwischen Flanschteil und Hülse eindringt. Der V-Ring ist dabei derart angeordnet, dass das Material bei einem Druckgefälle hin zum Dichtbereich abgehalten wird vom Dichtberiech. Wenn in einem anderen Betriebszustand der Bereich des Materials Unterdruck oder Vakuum aufweist, öffnet dann zwar der V-Ring, jedoch ist die Abdichtung mittels der beiden in der zweiten und dritten Ringnut angeordneten Dichtanordnungen ausreichend, um das Absaugen von Schmieröl aus dem Getriebe in den Bereich des Materials zu verhindern.

Erfindungsgemäß ist das Flanschteil mit einem einteilig oder mehrteilig ausgeführten Gehäuseteil verbunden, in welchem zumindest ein Lager aufgenommen ist, welches die Welle drehbar lagert,
wobei der in axialer Richtung gemessene kleinste Abstand der Ringnuten vom Lager größer ist als der halbe Innendurchmesser des Lagers, insbesondere als der halbe Innendurchmesser des an der Welle anliegenden Innenrings des Lagers. Von Vorteil ist dabei, dass die Welle zwar gelagert ist, aber die Hülse auf einem hervorragenden Endbereich der Welle aufgeschoben und verbunden ist, so dass die Hülse mittels der Zentrierung durch den Führungsring koaxial zu den Basisringen ausgerichtet ist und der Rundlauf der Hülse geringere Abweichungen als ein Hundertstel aufweist, obwohl die Hülse einen Außendurchmesser von mehr als 100 mm aufweist.

Bei einer vorteilhaften Ausgestaltung weist der Basisring im entspannten Zustand an seiner Innenseite einen Oberflächenabschnitt auf, welcher einer Kreiszylindermantelfläche gleicht, insbesondere deren axiale Breite größer als die Hälfte des größten Durchmessers des Ringquerschnitts ist. Von Vorteil ist dabei, dass ein flächiges Anliegen an der Hülse, also keine Punktberührung, ausführbar ist und somit eine hohe Schutzart und/oder eine hohe Dichtigkeit erreichbar ist.

Erfindungsgemäß ist der Außenring, der V-Ring und/oder der Führungsring aus FKM, insbesondere also Fluorkarbon-Kautschuk, gefertigt,
insbesondere wobei das Material des V-Rings eine geringere Härte aufweist als das Material des Außenrings und als das Material des Führungsrings,
insbesondere wobei das Material des Basisrings eine größere Härte aufweist als das Material des Basisrings, als das Material des Führungsrings und/oder als das Material des V-Rings,
und/oder dass die Hülse aus gehärtetem Stahl ausgeführt ist. Von Vorteil ist dabei, dass kostengünstige Materialien verwendbar sind. Die Hülse ist aus gehärtetem Stahl, der fein bearbeitet ist, herstellbar und somit gute Dichtbedingungen erreichbar. Da der Führungsring härter ist als der Basisring, ist ein Zentrieren durch den Führungsring ausführbar und der Basisring muss nur mit einem Material ausgeführt werden, das in der Materialpaarung mit dem Material der Hülse nur einen sehr niedrigen Reibungskoeffizienten bewirkt. Erfindungsgemäß ist der Außenring aus einem elastischen Material ausgeführt, so dass der Basisring aufgeschrumpft vorgespannt ist und somit an die Hülse angedrückt wird.

Erfindungsgemäß sind die Welle zusammen mit der Hülse als ein einziges Teil ausgeführt, also einteilig, insbesondere einstückig. Von Vorteil ist dabei, dass die Anzahl der Teile verringerbar ist.

Wichtige Merkmale bei dem Getriebe mit einer vorgenannten Wellenanordnung oder Extruder mit Getriebe mit einer vorgenannten Wellenanordnung sind, dass eine Extruderschnecke über die Extruderscneckenkopplung mit der Welle drehfest, insbesondere mittels Steckverzahnung, verbunden ist. Von Vorteil ist dabei, dass der die Extruderschnecken umfassende Extruder abwechselnd mit Vakuum und Überdruck betreibbar ist. In beiden Betriebsfällen ist der Bereich des von der Extruder Schnecke geförderten Materials abgedichtet zum Innenraum des Getriebes.

Weitere Vorteile ergeben sich aus den Unteransprüchen.

Die Erfindung wird nun anhand von schematischen Abbildungen näher erläutert:

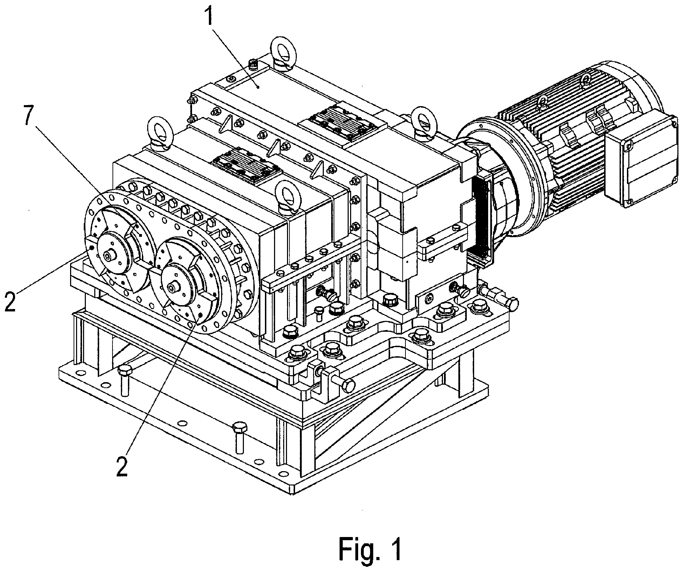

In der Figur 1 ist ein Antrieb, aufweisend ein von einem Elektromotor angetriebenen Getriebe 1, eines Extruderschneckenkopplungen 2 aufweisenden Extruders in Schrägansicht dargestellt.

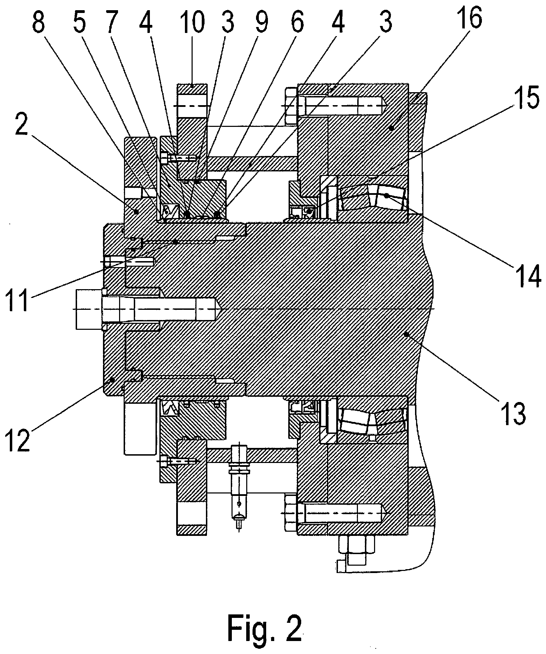

In der Figur 2 ist ein Querschnitt durch einen eine der Extruderschneckenkopplungen 2 aufweisenden Abtriebsbereich des Extruders dargestellt.

Wie in den Figuren dargestellt, ist die jeweilige Extruderschneckenkopplung 2 formschlüssig, insbesondere mittels einer Steckverzahnung 11, mit einer Welle 13 verbunden.

Die Extruderschneckenkopplung 2 ist von einer Deckplatte 12 axial begrenzt, welche von einem Schraubenkopf einer Schraube begrenzt wird, die in eine axial gerichtete Gewindebohrung der Welle 13 eingeschraubt ist.

Auf einem axial hervorragenden Hülsenabschnitt der Extruderschneckenkopplung 2 ist eine Hülse 8 aufgeschoben, die aus gehärtetem Stahl ausgeführt ist. Vorteiligerweise ist somit Reibung reduzierbar. Die Hülse ist auf die Welle 13 aufgepresst und klebeverbunden.

Die Welle 13 ist drehfest verbunden mit der Extruderschneckenkopplung 2. Die Welle 13 ist über Lager 14, die vorzugsweise nicht gespannt ausgeführt sind, drehbar gelagert. Dabei ist das Lager 14 in einem Lagerflansch 16, insbesondere Gehäuseteil, aufgenommen.

Der Lagerflansch 16 ist lösbar verbunden mit einem Gehäuseteil 10, welches mit einem Flanschteil 7 lösbar verbunden ist.

Wellendichtringe 15 sind im Lagerflansch 16 aufgenommen, wobei die Dichtlippen der Wellendichtringe 15 auf einer mit der Welle 13 verbundenen, zweiten, aus gehärtetem Stahl ausgeführten Hülse laufen, die wiederum auf die Welle 13 aufgepresst und klebeverbunden ist.

Die Lager 14 sind auf der von der Dichtung 15 in axialer Richtung abgewandten Seite angeordnet und somit im mit Schmieröl zumindest teilweise befüllten Innenraum des Getriebes 1 angeordnet, wobei im Innenraum des Getriebes 1 auch miteinander im Eingriff sich befindende Verzahnungsteile angeordnet sind.

Die Gehäuseteile sind miteinander dicht verbunden zur Bildung des Gehäuses des Getriebes 1.

Zum Schutz des Innenraums des Getriebes sind zwar die Wellendichtringe 15 als Ölabdichtung fungierend, jedoch ist Extruderschnecken-seitig ein sehr hoher Druck und je nach Betriebszustand sogar Vakuum vorgesehen.

Daher ist auf der Hülse 8 ein V-Ring aufgenommen, dessen Dichtlippe gegen eine fein bearbeitete Ringfläche des Flanschteils 7 drückt. Das Flanschteil weist zwei umlaufende Ringnuten auf.

In jeder der beiden Ringnuten ist eine Dichtanordnung aufgenommen, welche einen Basisring 3 aufweist, welcher radial umgeben ist von einem Außenring 4. Der Außenring 4 ist vorzugsweise aus einem ersten Kunststoff ausgeführt und vorzugsweise als O-Ring geformt. Der Außenring 4 ist vorzugsweise stoffschlüssig verbunden mit dem Basisring 3 und derart elastisch verformt, dass er gegen die Wandung der Ringnut gedrückt ist. Auf diese Weise dichtet der Außenring 4 zwischen Basisring 3 und Wandung der Ringnut ab.

Der Außenring 4 erfüllt somit die Dichtfunktion eines O-Rings. Darüber hinaus ist er auch zum Einbringen einer Schrumpfkraft, also eines Kraftfeldes, welches an allen Umfangspositionen eine, insbesondere die selbe, nach radial innen gerichtet, auf den Basisring 3 wirkende Spannkraft aufweist, geeignet ausgeführt.

Der Basisring 3 liegt an der Hülse 8 an, wobei der Berührbereich in axialer Richtung keine Punktberührung, sondern eine Linienberührung ist. Hierzu weist der Basisring 3 im Berührbereich einen Zylindermantelflächenabschnitt als Innenfläche auf, welche die Hülse 8 berührt. Der Basisring 3 gleitet somit relativ zur Hülse 8, wenn die Welle 13 in Drehbewegung relativ zum Gehäuse des Getriebes versetzt ist. Zur Verringerung der Reibungsverluste ist als Material des Basisrings 3 ein geeigneter zweiter Werkstoff geeignet gewählt. Der zweite Werkstoff ist vorzugsweise ein Kunststoff oder ein Gummi.

Zwar wäre als Basisring 3 auch ein mit Teflon, insbesondere also PTFE, insbesondere also Polytetrafluorethylen, beschichteter Messingring verwendbar, jedoch wird vorzugsweise ein Faserverbundwerkstoff verwendet, der ebenfalls ein Material aufweist, das in Paarung mit der Hülse 8, also gehärtetem Stahl, einen sehr niedrigen Reibungskoeffizienten bewirkt.

Die beiden Ringnuten sind in axialer Richtung voneinander beabstandet. In jeder der Ringnuten ist jeweils eine Dichtung, die den beschriebenen Basisring 3 und stoffschlüssig damit verbunden einen radial den jeweiligen Basisring umgebenden als O-Ring ausgeführten Außenring 4 aufweist.

Axial zwischen den beiden Ringnuten ist eine weitere, vorzugsweise radial weniger als die beiden Ringnuten ausgedehnte, Ringnut im Flanschteil 7 ausgeführt, in welcher ein Führungsring 6 angeordnet ist.

Der Führungsring 6 ist aus einem zweiten Werkstoff, insbesondere Kunststoff, wobei der zweite Werkstoff härter als der erste Werkstoff ist.

Da der Führungsring 6 flächig an der Hülse 8 anliegt, ist eine Zentrierung der Hülse 8 samt der mit der Hülse 8 verbundenen Welle 13 erreicht.

Denn die Welle 13 ist im Getriebe über die Lager 14 des Getriebes gelagert, so dass das aus dem Getriebe herausstehende Wellenende mit der darauf angeordneten Hülse 8 gleitgelagert ist mittels des Führungsrings 6.

Der Führungsring 6 sichert also eine Zentrierung der Hülse 8 zur Aufnahmebohrung des Flanschteils 7, so dass die Basisringe 3 keine radialen Querstöße oder Querbewegungen aufnehmen müssen, sondern möglichst konstanten Laufbedingungen ausgesetzt sind.

Der V-Ring 5 hält Schmutz und von den Extruderschnecken gefördertes Material fern von dem Beriech der Abdichtung zwischen Hülse 8 und Flanschteil 7.

Die radiale Ausdehnung der den Führungsring 6 aufnehmenden Ringnut ist geringer als die radiale Ausdehnung der jeweiligen die jeweilige Dichtanordnung aufnehmenden Ringnut.

Bei weiteren erfindungsgemäßen Ausführungsbeispielen wird das Gehäuse, umfassend Flanschteil 7, Gehäuseteil 10 und Lagerflansch 16 aus einer geringeren Anzahl von Teilen ausgeführt, indem Flanschteil 7 und Gehäuseteil 10 einstückig, also einteilig, ausgeführt werden und gegebenenfalls auch der Lagerflansch 16 zusammen mit dem Flanschteil 7 und dem Gehäuseteil 10 aus einem einzigen Stück ausgeführt werden. Auf diese Weise ist eine einfache Herstellung erreichbar, da weniger Teile handzuhaben sind.

Die erfindungsgemäße Wellenanordnung ist nicht nur für Getriebe sondern auch für andere Vorrichtungen verwendbar, bei denen eine leistungsfähige Abdichtung gegen einen Bereich mit unter hohem oder niedrigem Druck stehenden Material realisiert werden soll und eine Lagerung der Welle nicht vorgespannt ist und/oder weiter in axialer Richtung, also in Richtung der Drehachse der Welle 13, entfernt ist als der halbe Durchmesser der Welle 13 insbesondere im Bereich der Lageraufnahme des am nächsten zur Abdichtung angeordneten Lagers der Welle 13.

### Bezugszeichenliste

1 Getriebe
2 Extruderschneckenkopplung
3 Basisring
4 Außenring
5 V-Ring
6 Führungsring
7 Flanschteil, insbesondere Gehäuseteil
8 Hülse
9 Dichtung
10 Gehäuseteil
11 Verzahnung, insbesondere Steckverzahnung
12 Deckplatte
13 Welle
14 Lager, insbesondere unverspanntes Lager
15 Wellendichtring
16 Lagerflansch, insbesondere Gehäuseteil

## Patentansprüche

1. Wellenanordnung mit einer relativ zu einem Flanschteil (7) drehbar gelagerten Welle (13), wobei auf die Welle (13) eine Hülse (8) aufgesteckt und drehfest verbunden ist,
insbesondere stoffschlüssig und kraftschlüssig verbunden ist, oder wobei die Welle (13) zusammen mit einer Hülse als einziges Teil ausgeführt sind, also einteilig, insbesondere einstückig,
**wobei** das Flanschteil (7) eine erste Ringnut aufweist und eine zur ersten Ringnut koaxial ausgerichtete zweite und/oder dritte Ringnut,
wobei in der zweiten und/oder dritten Ringnut eine oder jeweils eine Dichtanordnung angeordnet ist,
wobei die jeweilige Dichtanordnung jeweils einen Basisring (3) aufweist, der radial umgeben ist von einem jeweiligen Außenring (4), wobei der Basisring (3) die Hülse (8) berührt und der Außenring (4) die Wandung der zweiten Ringnut berührt,
wobei in der ersten Ringnut ein Führungsring (6) zur Zentrierung der Hülse (8) angeordnet ist,
**wobei der Führungsring (6) sowohl die Hülse (8) als auch die Wandung der Ringnut berührt,**
wobei **auf der von der ersten Ringnut abgewandten Seite der zweiten Ringnut ein V-Ring (5) auf der Hülse (8) aufgenommen ist,**
**wobei der V-Ring (5) von den Ringnuten in axialer Richtung beabstandet ist,**
**wobei der Außenring (4) aus einem elastischen Material ausgeführt ist, so dass der Basisring (3) aufgeschrumpft vorgespannt ist und somit an die Hülse (8) angedrückt ist,**
**dadurch gekennzeichnet, dass** die Dichtlippe des V-Rings (5) das Flanschteil (7) berührt,
**wobei der Außenring (4), der V-Ring (5) und/oder der Führungsring (6) aus FKM, insbesondere also Fluorkarbon-Kautschuk, gefertigt ist,**
**wobei das Flanschteil (7) mit einem einteilig oder mehrteilig ausgeführten Gehäuseteil (10) verbunden ist, in welchem zumindest ein Lager (14) aufgenommen ist, welches die Welle (13) drehbar lagert,**
**wobei der in axialer Richtung gemessene kleinste Abstand der Ringnuten vom Lager (14) größer ist als der halbe Innendurchmesser des Lagers, insbesondere als der halbe Innendurchmesser des an der Welle (13) anliegenden Innenrings des Lagers.**

2. Wellenanordnung nach Anspruch 1,
**dadurch gekennzeichnet, dass**
der Führungsring (6) an der Wandung der ersten Ringnut abgestützt ist und zur Hülse (8) hin ein Gleitkontakt zwischen Führungsring (6) und Hülse (8) vorhanden ist.

3. Wellenanordnung nach einem der vorangegangenen Ansprüche,
**dadurch gekennzeichnet, dass**
der Außenring (4) als O-Ring ausgeführt ist.

4. Wellenanordnung nach einem der vorangegangenen Ansprüche,
**dadurch gekennzeichnet, dass**
der Basisring (3) die Hülse (8) flächig berührt,
insbesondere also die Berührfläche der Hülse (8) mit dem Basisring (3) ein Zylindermantelabschnitt ist und/oder der Basisring (3) aus einem Polyethylen gefertigt ist, insbesondere aus einem Polyethylen mit ultrahohem Molekulargewicht, oder der Basisring (3) ein mit PTFE, insbesondere Teflon, beschichteter Messingring ist.

5. Wellenanordnung nach einem der vorangegangenen Ansprüche,
**dadurch gekennzeichnet, dass**
der Führungsring (6) die Hülse (8) flächig berührt,
insbesondere also die Berührfläche der Hülse (8) mit dem Führungsring (6) ein Zylindermantelabschnitt ist.

6. Wellenanordnung nach einem der vorangegangenen Ansprüche,
**dadurch gekennzeichnet, dass**
**der Führungsring (6) aus einem härteren Material als der Basisring (3) ausgeführt ist.**

7. Wellenanordnung nach einem der vorangegangenen Ansprüche,
**dadurch gekennzeichnet, dass**
die Berührfläche zwischen Hülse (8) und Führungsring (6) in axialer Richtung breiter ist als die Berührfläche zwischen Hülse (8) und Basisring (3).

8. Wellenanordnung nach einem der vorangegangenen Ansprüche,
**dadurch gekennzeichnet, dass**
die erste Ringnut radial weniger ausgedehnt ist als die zweite Ringnut.

9. Wellenanordnung nach einem der vorangegangenen Ansprüche,
**dadurch gekennzeichnet, dass**
die erste Ringnut in axialer Richtung zwischen der zweiten und der dritten Ringnut angeordnet ist.

10. Wellenanordnung nach einem der vorangegangenen Ansprüche,
**dadurch gekennzeichnet, dass**
der Basisring (3) im entspannten Zustand an seiner Innenseite einen Oberflächenabschnitt aufweist, welcher einer Kreiszylindermantelfläche gleicht, insbesondere deren axiale Breite größer als die Hälfte des größten Durchmessers des Ringquerschnitts ist.

11. Wellenanordnung nach einem der vorangegangenen Ansprüche,
**dadurch gekennzeichnet, dass**
**das Material des V-Rings (5) eine geringere Härte aufweist als das Material des Außenrings (4) und als das Material des Führungsrings (6),**
und/oder dass die Hülse (8) aus gehärtetem Stahl ausgeführt ist.

12. Getriebe (1) mit einer Wellenanordnung nach einem der vorangegangenen Ansprüche oder Extruder mit Getriebe (1) mit einer Wellenanordnung nach einem der vorangegangenen Ansprüche, wobei eine Extruderschneckenkopplung (2) mit der Welle (13) drehfest, insbesondere mittels Steckverzahnung, verbunden ist.

## Claims

1. A shaft arrangement with a shaft (13) rotatably mounted in relation to a flange part (7),
wherein a sleeve (8) is placed on the shaft (13) and is connected non-rotatably, in particular is connected by a material-formed bond and in a force-fit, or
wherein the shaft (13) together with a sleeve are embodied as a single part, i.e. in one part, in particular in one piece,
wherein the flange part (7) has a first annular groove and a second and/or third annular groove oriented coaxially with the first annular groove,
wherein a or in each case one sealing arrangement is arranged in the second and/or third annular groove,
wherein the respective sealing arrangement in each case has a base ring (3) which is surrounded radially by a respective outer ring (4), wherein the base ring (3) contacts the sleeve (8) and the outer ring (4) contacts the wall of the second annular groove,
wherein a guide ring (6) for centring the sleeve (8) is arranged in the first annular groove,
wherein the guide ring (6) contacts both the sleeve (8) and the wall of the annular groove,
wherein a V-ring (5) is accommodated on the sleeve (8) on that side of the second annular groove which is remote from the first annular groove,
wherein the V-ring (5) is spaced apart from the annular grooves in the axial direction,
wherein the outer ring (4) is made of an elastic material, so that the base ring (3) is pretensioned by being shrunk on and thus is pressed against the sleeve (8),
**characterised in that** the sealing lip of the V-ring (5) contacts the flange part (7),
with the outer ring (4), the V-ring (5) and/or the guide ring (6) being manufactured from fluororubber, in particular therefore fluorocarbon rubber,
with the flange part (7) being connected to a housing part (10) made in one part or in multiple parts, in which housing part is accommodated at least one bearing (14) which rotatably mounts the shaft (13),
with the shortest distance of the annular grooves from the bearing (14), measured in the axial direction, being greater than half the internal diameter of the bearing, in particular than half the internal diameter of the inner ring of the bearing which lies against the shaft (13).

2. A shaft arrangement according to claim 1,
**characterised in that**
the guide ring (6) is supported on the wall of the first annular groove, and towards the sleeve (8) there is sliding contact between the guide ring (6) and sleeve (8).

3. A shaft arrangement according to one of the preceding claims,
**characterised in that**
the outer ring (4) is embodied as an O-ring.

4. A shaft arrangement according to one of the preceding claims,
**characterised in that**
the base ring (3) contacts the sleeve (8) with its face,
in particular therefore the face of contact of the sleeve (8) with the base ring (3) is a lateral cylinder surface portion and/or the base ring (3) is manufactured from a polyethylene, in particular from a polyethylene with an ultra-high molecular weight, or the base ring (3) is a brass ring coated with PTFE, in particular Teflon.

5. A shaft arrangement according to one of the preceding claims,
**characterised in that**
the guide ring (6) contacts the sleeve (8) with its face,
in particular therefore the face of contact of the sleeve (8) with the guide ring (6) is a lateral cylinder surface portion.

6. A shaft arrangement according to one of the preceding claims,
**characterised in that**
the guide ring (6) is made from a harder material than the base ring (3).

7. A shaft arrangement according to one of the preceding claims,
**characterised in that**
the face of contact between the sleeve (8) and guide ring (6) in the axial direction is broader than the face of contact between the sleeve (8) and base ring (3).

8. A shaft arrangement according to one of the preceding claims,
**characterised in that**
the first annular groove is extended radially less than the second annular groove.

9. A shaft arrangement according to one of the preceding claims,
**characterised in that**
the first annular groove is arranged between the second and the third annular groove in the axial direction.

10. A shaft arrangement according to one of the preceding claims,
**characterised in that**
the base ring (3) in the relaxed state has on its inside a surface portion which is equal to a lateral regular-cylinder surface, in particular the axial width of which is greater than half the largest diameter of the ring cross-section.

11. A shaft arrangement according to one of the preceding claims,
**characterised in that**
the material of the V-ring (5) has a lesser hardness than the material of the outer ring (4) and than the material of the guide ring (6),
and/or **in that** the sleeve (8) is made of hardened steel.

12. A gear unit (1) with a shaft arrangement according to one of the preceding claims or an extruder with a gear unit (1) with a shaft arrangement according to one of the preceding claims, wherein an extruder screw coupling (2) is connected non-rotatably, in particular by means of splines, to the shaft (13).

## Revendications

1. Ensemble formant arbre, comprenant un arbre (13) monté rotatif par rapport à une partie bride (7), un manchon (8) étant enfilé et relié de manière solidaire en rotation sur l'arbre (13), en particulier étant relié par complémentarité de matière et par complémentarité de force, ou l'arbre (13) étant conçu sous la forme d'une pièce unique incluant un manchon, c'est-à-dire d'une seule pièce, en particulier d'un seul tenant,
la partie bride (7) présentant une première rainure annulaire et une deuxième et/ou une troisième rainure annulaire orientée de manière coaxiale par rapport à la première rainure annulaire,
un ou respectivement un ensemble d'étanchéité étant agencé dans la deuxième et/ou la troisième rainure annulaire,
l'ensemble d'étanchéité respectif présentant respectivement une bague de base (3) entourée radialement par une bague extérieure (4) respective, la bague de base (3) étant en contact avec le manchon (8) et la bague extérieure (4) étant en contact avec la paroi de la deuxième rainure annulaire,
une bague de guidage (6) permettant de centrer le manchon (8) étant agencée dans la première rainure annulaire,
la bague de guidage (6) étant en contact à la fois avec le manchon (8) et avec la paroi de la rainure annulaire,
un joint en V (5) étant logé sur le manchon (8) sur le côté de la deuxième rainure annulaire qui est opposé à la première rainure annulaire,
le joint en V (5) étant espacé par rapport aux rainures annulaires dans la direction axiale,
la bague extérieure (4) étant constituée d'un matériau élastique, de sorte que la bague de base (3) est précontrainte par rétrécissement et est ainsi pressée contre le manchon (8),
**caractérisé en ce que** la lèvre d'étanchéité du joint en V (5) est en contact avec la partie bride (7),
la bague extérieure (4), le joint en V (5) et/ou la bague de guidage (6) étant fabriqués en FKM, en particulier en caoutchouc fluorocarboné,
la partie bride (7) étant reliée à une partie boîtier (10) réalisée en une ou plusieurs parties et au sein de laquelle est logé au moins un palier (14) supportant l'arbre (13) de manière rotative,
la plus petite distance mesurée entre les rainures annulaires et le palier (14) dans la direction axiale étant supérieure à la moitié du diamètre intérieur du palier, en particulier à la moitié du diamètre intérieur de la bague intérieure du palier appliquée contre l'arbre (13).

2. Ensemble formant arbre selon la revendication 1,
**caractérisé en ce que**
la bague de guidage (6) prend appui sur la paroi de la première rainure annulaire et il existe un contact coulissant entre la bague de guidage (6) et le manchon (8) en direction du manchon (8).

3. Ensemble formant arbre selon l'une quelconque des revendications précédentes,
**caractérisé en ce que**
la bague extérieure (4) est réalisée sous la forme d'un joint torique.

4. Ensemble formant arbre selon l'une quelconque des revendications précédentes,
**caractérisé en ce que**
la bague de base (3) est en contact à plat avec le manchon (8),
la surface de contact du manchon (8) avec la bague de base (3) est également en particulier une section d'aire latérale de cylindre et/ou la bague de base (3) est fabriquée à partir d'un polyéthylène, en particulier d'un polyéthylène de poids moléculaire ultra élevé, ou la bague de base (3) est une bague en laiton revêtue de PTFE, en particulier de téflon.

5. Ensemble formant arbre selon l'une quelconque des revendications précédentes,
**caractérisé en ce que**
la bague de base (6) est en contact à plat avec le manchon (8),
la surface de contact du manchon (8) avec la bague de guidage (6) est en particulier une section d'aire latérale de cylindre.

6. Ensemble formant arbre selon l'une quelconque des revendications précédentes,
**caractérisé en ce que**
la bague de guidage (6) est constituée d'un matériau plus dur que la bague de base (3).

7. Ensemble formant arbre selon l'une quelconque des revendications précédentes,
**caractérisé en ce que**
la surface de contact entre le manchon (8) et la bague de guidage (6) dans la direction axiale est plus large que la surface de contact entre le manchon (8) et la bague de base (3).

8. Ensemble formant arbre selon l'une quelconque des revendications précédentes,
**caractérisé en ce que**
la première rainure annulaire est moins étendue radialement que la deuxième rainure annulaire.

9. Ensemble formant arbre selon l'une quelconque des revendications précédentes,
**caractérisé en ce que**
la première rainure annulaire est agencée entre la deuxième et la troisième rainure annulaire dans la direction axiale.

10. Ensemble formant arbre selon l'une quelconque des revendications précédentes,
**caractérisé en ce que**
la bague de base (3), dans un état non contraint, présente sur sa face intérieure une section de surface qui ressemble à une surface d'aire latérale de cylindre de révolution, en particulier dont la largeur axiale est supérieure à la moitié du plus grand diamètre de la section transversale de bague.

11. Ensemble formant arbre selon l'une quelconque des revendications précédentes,
**caractérisé en ce que**
le matériau du joint en V (5) présente une dureté inférieure à celle du matériau de la bague extérieure (4) et à celle du matériau de la bague de guidage (6),
et/ou **en ce que** le manchon (8) est réalisé en acier trempé.

12. Transmission (1) comprenant un ensemble formant arbre selon l'une quelconque des revendications précédentes ou extrudeuse avec transmission (1) comprenant un ensemble formant arbre selon l'une quelconque des revendications précédentes, un couplage de vis d'extrusion (2) étant relié à l'arbre (13) de manière solidaire en rotation, en particulier au moyen de cannelures enfichables.
